Europäisches Patentamt

European Patent Office

Office européen des brevets

(19)

(11) Numéro de publication: **0 169 108**
**B1**

(12) **FASCICULE DE BREVET EUROPEEN**

(45) Date de publication du fascicule du brevet:
**01.06.88**

(51) Int. Cl.⁴: **H 02 P 5/34**

(21) Numéro de dépôt: **85401163.2**

(22) Date de dépôt: **13.06.85**

(54) Dispositif de régulation de la vitesse d'un moteur électrique asynchrome.

(30) Priorité: **18.06.84 FR 8409473**

(43) Date de publication de la demande:
**22.01.86 Bulletin 86/4**

(45) Mention de la délivrance du brevet:
**01.06.88 Bulletin 88/22**

(84) Etats contractants désignés:
**DE GB NL**

(56) Documents cités:
**DE - A - 2 527 428**
**US - A - 2 989 684**
**US - A - 3 074 001**

(73) Titulaire: **ETAT-FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées (FR)**

(72) Inventeur: **Pascal, Jean-Pierre, 27, rue des Meuniers, F-75012 Paris (FR)**
Inventeur: **Giovachini, Jean-Luc, 4 Place de Bretuil, F-75015 Paris (FR)**
Inventeur: **Croisier, Jacques, 6 Place Jean-Jaurès, F-42000 Saint Etienne (FR)**

ACTORUM AG

## Description

La présente invention concerne un dispositif de régulation de la vitesse d'un moteur électrique asynchrone, en particulier un moteur linéaire.

Il est maintenant bien connu d'utiliser des moteurs électriques asynchrones et plus particulièrement des moteurs linéaires pour effectuer le déplacement d'un object, en particulier d'un véhicule se déplaçant le long d'un rail. Toutefois, la régulation de la vitesse de tel moteur reste un problème, surtout lorsque la vitesse doit être maintenue à un niveau donnée avec une grande précision.

On régule généralement la vitesse du moteur par une régulation de la fréquence du courant d'alimentation de ce moteur.

On a proposé pour cela, comme l'indique le document DE-A-2527 428, d'utiliser un onduleur associé à un dispositif électronique assurant une très grande précision de la régulation de la fréquence. Toutefois, l'onduleur et les dispositifs électroniques associés sont généralement coûteux et atteignent des prix prohibitifs lorsque l'on souhaite alimenter un moteur asynchrone de puissance élevée, destiné à entraîner des véhicules lourds ou soumis à des forces de freinage importantes, comme c'est le cas par exemple pour une plate-forme immergée, servant à la réalisation d'essais hydro-dynamiques.

Comme montré dans le document US-A-2 989 684 on a également réalisé des installations dans lesquelles le moteur asynchrone est alimenté par un alternateur, lui-même entraîné par un moteur à courant continu, permettant de faire varier la vitesse de rotation de l'alternateur et donc la fréquence d'alimentation du moteur asynchrone. Dans ce cas, la régulation est obtenue en comparant la vitesse réelle du véhicule associée au moteur asynchrone avec la vitesse de consigne et en modifiant l'alimentation du moteur à courant continu en fonction de l écart résultant de la comparaison. Il est toutefois difficile d'obtenir une régulation précise de la vitesse du moteur asynchrone en raison de l'inertie des machines électro-mécaniques (moteur à courant continu et alternateur) montées en cascade.

On a également tenté de réguler la vitesse par un réglage de la tension d'alimentation. Cependant, les essais de régulation de ce type se sont heurtés à la difficulté de faire varier rapidement la tension d'alimentation, les alternateurs étant généralement construits pour délivrer une tension stable et comportant pour cela une réactance interne faible, résultant: du caractère massif des circuits magnétiques, d'un entrefer largement dimensionné entre le rotor et le stator et de la présence de dispositifs amortissant les variations de la tension, comme par exemple des courts-circuits sur les spires du rotor. Une fois encore, la rapidité de régulation de la vitesse du moteur et de l'object associé est donc restée limitée.

Un but de la présente invention est de réaliser un dispositif de régulation de vitesse d'un moteur électrique asynchrone qui possède un temps de réponse très court, et permette de délivrer au moteur asynchrone une puissance dont les variations sont très rapides.

En vue de la réaction de ce but, on propose selon l'invention un dispositif de régulation de la vitesse de moteurs électriques asynchrones comprenant une partie fixe et une partie mobile, ce dispositif comportant un générateur synchrone de courant alternatif à fréquence variable ayant des moyens d'excitation alimentés par des moyens de commande d'un courant d'excitation, des moyens d'entraînement du générateur réglable en vitesse, des moyens de régulation de la fréquence du générateur agissant sur les moyens d'entraînement réglables du générateur en fonction d'une consigne de vitesse des moteurs asynchrones, dispositif caractérisé en ce qu'il comprend des moyens de mesure de la vitesse réelle de la partie mobile du moteur et des moyens de comparaison de la vitesse réelle et de la consigne de vitesse du moteur, les moyens de commande du courant d'excitation étant reliés aux moyens de comparaison de la vitesse réelle avec la consigne, et en ce que le générateur a une réactance interne élevée.

En raison de la réactance interne élevée du générateur, les variations du courant d'excitation résultant du signal d'écart émis par les moyens de comparaison se traduisent par une variation rapide du courant fourni au moteur asynchrone par le générateur de courant alternatif et donc une variation rapide de la poussée produite par le moteur asynchrone. On fait donc ainsi varier rapidement la vitesse du moteur.

Selon une version avantageuse de l'invention, la réactance interne élevée du générateur de courant alternatif est obtenue en prévoyant un rotor comprenant un circuit magnétique feuilleté, un faible entrefer entre le rotor et le stator du générateur, et la suppression de tout élément amortisseur sur le rotor du générateur. En pratique, le générateur est de préférence obtenu en montant un moteur asynchrone à rotor bobiné en génératrice synchrone.

Selon un autre aspect avantageux de l'invention, on prévoit de relier les moyens de commande du courant d'excitation en aval des moyens de comparaison de la vitesse réelle avec la consigne, à des moyens de détermination de la résistance à l'avancement de la partie mobile du moteur asynchrone. Ainsi, le signal d'écart entre la vitesse réelle et la vitesse de consigne se trouve modulé, de sorte que l'écart du courant d'excitation du générateur est une fonction linéaire de l'écart de vitesse entre la vitesse réelle et la consigne.

Selon encore un autre aspect avantageux de l'invention, on prévoit de relier les moyens de commande du courant d'excitation, en aval des moyens de comparaison de la vitesse réelle avec la consigne, à des moyens de détermination de l'accélération de la partie mobile du moteur asynchrone. Ainsi, le signal d'écart résultant des moyens de comparaison est modulé afin d'éviter des variations trop rapides du courant d'excitation qui provoquerait des à-coups sur le moteur asynchrone.

Selon une réalisation préférée de l'invention, on prévoit en outre de relier les moyens de commande du courant d'excitation à des moyens de détection des courants à la sortie du générateur, ces moyens comportant des moyens de détection des courants instantanés, et des moyens de détermination de la valeur efficace moyenne de ces courants. Ainsi, les courants d'excitation du générateur de courant alternatif se trouve stabilisé.

D'autres caractéristiques et avantages de l'invention résulteront encore de la description ci-après d'un exemple non limitatif en référence aux dessins annexés dans lesquels:

— la figure 1 est une représentation schématique du dispositif de régulation,

— la figure 2 est une courbe représentative de la vitesse en fonction du temps,

— la figure 3 est une courbe représentative des variations de la fréquence du courant fourni par le générateur en fonction du temps,

— la figure 4 est une courbe représentative des variations du signal d'écart entre la vitesse réelle et la vitesse de consigne en fonction du temps,

— la figure 5 est une courbe représentative des variations du courant d'alimentation produit par le générateur en fonction du temps.

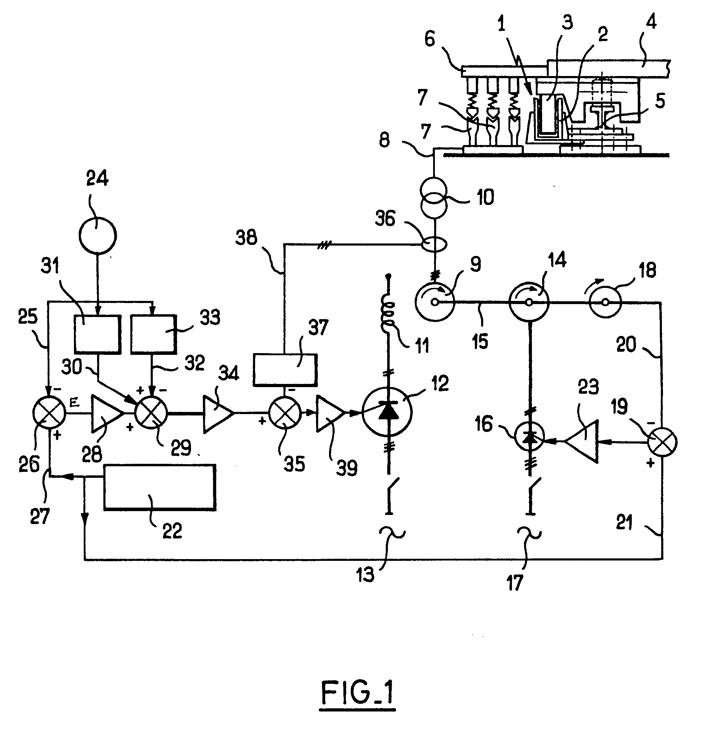

En référence à la figure 1, le moteur asynchrone 1, ici un moteur linéaire, comporte une partie fixe formée par un rail induit 2 et une partie mobile formée par une série d'inducteurs 3, portés par un objet à déplacer. Dans le cas représenté, l'objet à déplacer est une plate-forme 4, partiellement représentée, supportée par un rail 5. Les inducteurs 3 sont reliés par l'intermédiaire d'une potence 6 à des contacts frottants 7, eux-mêmes reliés par un câble 8 à un générateur 9 de courant alternatif à fréquence variable, par l'intermédiaire d'un transformateur 10.

Le générateur 9 comporte des moyens d'excitation formés par une bobine 11, alimentée par des moyens de commande d'un courant d'excitation formé par un thyristor 12 relié à une source de courant alternatif 13.

Le générateur 9 de courant alternatif à fréquence variable est entraîné par un moteur à courant continu 14, par l'intermédiaire d'un arbre 15. Le moteur à courant continu 14 est lui-même alimenté par une source de courant continu formé par un thyristor 16 relié à une source de courant alternatif 17.

Des moyens de régulation de la fréquence du générateur 9 de courant alternatif à fréquence variable sont formés par une dynamo tachymétrique 18 montée sur l'arbre 15 et reliée à une entrée inverseuse d'un sommateur 19 par une ligne 20. Une entrée directe du sommateur 19 est par ailleurs reliée par une ligne 21 à des moyens d'établissement d'une consigne de vitesse 22, par exemple un calculateur déterminant les vitesses auxquelles la plate-forme 4 doit être maintenue pour effectuer des tests. La sortie du comparateur 19 est reliée à la gachette du thyristor 16 par l'intermédiaire d'un amplificateur 23.

Des moyens de mesure de la vitesse réelle de la partie mobile 3 du moteur 1 sont formés, par exemple, par une dynamo tachymétrique 24 représentée séparément sur la figure 1, pour des raisons de commodité, mais normalement fixée sur la plate-forme 4 et comportant une roulette s'appuyant sur le rail 5.

La dynamo tachymétrique 24 est reliée par une ligne 25 à une entrée inverseuse d'un sommateur 26 dont une entrée directe est reliée par une ligne 27 aux moyens 22 de détermination de la consigne. Le sommateur 26 réalise ainsi des moyens de comparaison de la vitesse réelle de la partie mobile 3 (et donc de la plate-forme 4) du moteur asynchrone 1 avec la consigne 22.

Le signal d'écart E émit par le sommateur 26 est amplifié par un amplificateur 28. L'amplificateur 28 est de préférence un amplificateur à double alternance à saturation. La sortie de l'amplificateur 28 est reliée à l'une des entrées directes d'un sommateur 29. Une deuxième entrée directe du sommateur 29 est reliée par une ligne 30 à des moyens 31 de détermination de la résistance à l'avancement de la partie mobile 3 du moteur asynchrone 1 et de la plate-forme 4 qu'elle entraîne. Les moyens de détermination 31 de la résistance à l'avancement de la partie mobile 3 du moteur asynchrone 1 sont reliés à la dynamo tachymétrique 24, et déterminent la résistance à l'avancement par un calcul à partir de la vitesse mesurée, par exemple au moyen de la formule A + B V² où A et B sont des constantes prédéterminées en fonction du profil de la plate-forme 4.

Une entrée inverseuse du sommateur 29 est reliée par l'intermédiaire d'une ligne 32 à des moyens de détermination 33 de l'accélération de la partie mobile 3 du moteur asynchrone 1 et de la plate-forme 4 qu'elle entraîne. Les moyens de détermination de l'accélération 33 sont formés par un calculateur dont l'entrée est reliée à la dynamo tachymétrique 24 et qui détermine l'accélération par dérivation de la vitesse mesurée. Le sommateur 29 comporte, d'une façon connue en soi, des moyens pour fournir à sa sortie une grandeur représentative d'un courant positif (ou nul si la somme algébrique des entrées est négative, par exemple pour une décélération). La sortie du sommateur 29 est reliée à l'entrée d'un amplificateur 34 dont la sortie est raccordée à une entrée directe d'un sommateur 35.

Une entrée inverseuse du sommateur 35 est reliée à des moyens de détection des courants (c'est-à-dire du courant pour chaque phase) à la sortie du générateur 9 de courant alternatif. Ces moyens de détection des courants comporte des moyens de détection des courants instantanés formés par un capteur de courant 36, par exemple un transformateur d'intensité, disposé autour du câble 8 reliant le générateur 9 de courant alternatif au moteur asynchrone 1, et de moyens 37 de détermination de la valeur efficace moyenne des courants (par intégration de la valeur instantanée) reliés au capteur 36 par une ligne 38.

La sortie du sommateur 35 est reliée à la gachette du thyristor 12 par l'intermédiaire d'un amplificateur 39.

Afin que les variations du courant dans le câble 8 soient très rapides en réponse aux variations du courant dans la bobine 11, le générateur 9 est un générateur à réactance interne élevée. Cette réactance interne élevée est obtenue en particulier en utilisant un générateur comportant un rotor feuilleté, un faible entrefer entre le rotor et le stator, c'est-à-dire un entrefer inférieur ou égal à 5 mm et en ne prévoyant aucun amortisseur, c'est-à-dire aucun court-circuit entre les spires du rotor. En particulier, des résultats très satisfaisants ont été obtenus en utilisant un moteur asynchrone à rotor bobiné monté en génératrice synchrone.

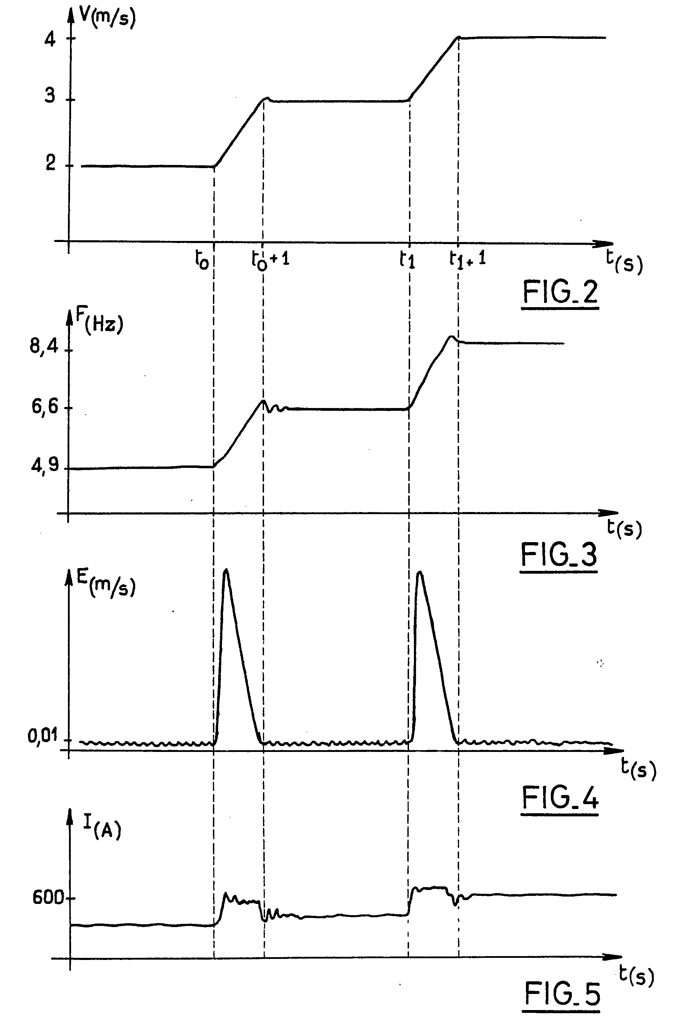

On constate sur les figures 2 à 5 que lors d'une modification de la consigne dans le sens d'une élévation de la vitesse souhaitée, le signal d'écart E à la sortie du sommateur 26 augmente brutalement (figure 4) et entraîne une augmentation rapide de la fréquence F (figure 3) de l'intensité I dans le câble 8 (figure 5) et finalement de la vitesse V du véhicule 4 (figure 2). On remarque sur ces courbes que le dispositif de régulation permet d'obtenir une stabilisation extrêmement rapide de la vitesse.

Aucune courbe représentative de la tension aux bornes du générateur 9 n'est donnée. Cette tension varie en effet de façon importante, mais ces variations sont sans effet sur la vitesse du moteur 1, en raison de la régulation sur le courant.

A titre d'exemple, pour une plate-forme immergée ayant une masse totale équipée de 8 000 kg, montée sur des rails et entraînée par un moteur linéaire 14 pôles d'une masse de 700 kg et ayant une poussée de 10 kN (pour 5 A/mm²) alimentés sous une tension de 0 à 55 V avec un courant de 0 à 600 A, on a pu obtenir une vitesse stable de 6 mm/s à 6 m/s, avec des écarts de 1 mm/s pour une vitesse de 1 m/s.

La fréquence du courant alternatif produit par le générateur 9 peut être asservie par une liaison complémentaire du sommateur 19 avec la vitesse mesurée.

La modulation de l'écart de sortie du sommateur 26 peut être modulée par d'autres fonctions que celles qui ont été décrites et qui ont pour but d'amortir les variations du courant dans la bobine 11.

La régulation selon l'invention peut être réalisée aussi bien avec des signaux analogiques qu'avec des signaux numériques, les moyens de commande du courant d'excitation étant bien entendu adaptés en conséquence.

**Revendications**

1. Dispositif de régulation de la vitesse de moteurs électriques asynchrones (1) comprenant une partie fixe (2) et une partie mobile (3), ce dispositif comportant un générateur (9) synchrone de courant alternatif à fréquence variable ayant des moyens d'excitation (11) alimentés par des moyens de commande (12) d'un courant d'excitation, des moyens d'entraînement (14) du générateur (9) réglables en vitesse, des moyens de régulation (19, 23) de la fréquence du générateur (9) agissant sur les moyens d'entraînement réglables du générateur en fonction d'une consigne (22) de vitesse des moteurs asynchrones, dispositif caractérisé en ce qu'il comprend des moyens de mesure (24) de la vitesse réelle de la partie mobile (3) du moteur (1) et des moyens de comparaison (26) de la vitesse réelle et de la consigne (22) de vitesse du moteur (1), les moyens de commande (12) du courant d'excitation étant reliés aux moyens de comparaison (26) de la vitesse réelle avec la consigne, et en ce que le générateur (9) a une réactance interne élevée.

2. Dispositif de régulation conforme à la revendication 1, caractérisé en ce que le générateur (9) de courant alternatif comporte un rotor comprenant un circuit magnétique feuilleté.

3. Dispositif de régulation conforme à la revendication 1, caractérisé en ce que le générateur (9) de courant alternatif comporte un stator et un rotor séparés par un entrefer inférieur ou au plus égal à 5 mm.

4. Dispositif de régulation conforme à la revendication 1, caractérisé en ce que le générateur (9) de courant alternatif est un moteur asynchrone monté en génératrice synchrone.

5. Dispositif de régulation conforme à l'une des revendications 1 à 4, caractérisé en ce que les moyens de commande (12) du courant d'excitation sont reliés, en aval des moyens de comparaison (26) de la vitesse réelle avec la consigne, à des moyens de détermination (31) de la résistance à l'avancement de la partie mobile (3) du moteur asynchrone (1).

6. Dispositif de régulation conforme à l'une des revendications 1 à 5, caractérisé en ce que les moyens de commande (12) du courant d'excitation sont reliés en aval des moyens de comparaison (26) de la vitesse réelle avec la consigne, à des moyens de détermination (33) de l'accélération de la partie mobile (3) du moteur asynchrone (1).

7. Dispositif de régulation conforme à l'une des revendications 1 à 6, caractérisé en ce que les moyens de commande (12) du courant d'excitation sont reliés en aval des moyens de comparaison (26) de la vitesse réelle avec la consigne, à des moyens de détection (36, 37) des courants à la sortie du générateur de courant alternatif.

8. Dispositif de régulation conforme à la revendication 7, caractérisé en ce que les moyens de détection des courants comportent des moyens de détection (36) des courants instantanés et des moyens de détermination (37) de la valeur efficace moyenne de ces courants.

**Patentansprüche**

1. Vorrichtung zum stufenlosen Stellen der Bewegungsgeschwindigkeit von elektrischen Asynchron-Motoren (1) mit einem festen Teil (2) und einem beweglichen Teil (3), wobei die Vorrichtung aus einem Synchrongenerator (9) für die Erzeugung eines Wechselstromes veränderlicher Frequenz mit über die Stellglieder (12) eines Erregungsstromes versorgten Erregungsmitteln (11), drehzahlregelbaren Antriebsmitteln (14) des Generators (9), Regelungsmitteln (19, 23) der Frequenz des Generators (9), die die drehzahlregelbaren Antriebsmittel des Generators anhand eines festgelegten Sollwertes (22) der Bewegungsgeschwindigkeit der Asynchronmotoren steuern, besteht, dadurch gekennzeichnet, dass sie mit Messmitteln (24) zur Erfassung der Ist-Geschwindigkeit des beweglichen Teils (3) des Motors (1) sowie mit Mitteln (26) zum Vergleich des Ist- bzw. Sollwertes (22) der Geschwindigkeit des Motors (1) versehen ist, wobei die Stellglieder (12) des Erregungsstromes mit den Mitteln zum Vergleich des Ist- bzw. Sollwertes der Geschwindigkeit verbunden sind und wobei der Generator (9) einen hohen inneren Blindwiderstand aufweist.

2. Regelungsvorrichtung nach Anspruch 1, dadurch gekennzeichnet, dass der Wechselstromgenerator (9) einen Läufer mit einem geblechten Magnetkreis besitzt.

3. Regelungsvorrichtung nach Anspruch 1, dadurch gekennzeichnet, dass der Wechselstromgenerator (9) einen Stator und einen Läufer besitzt, die durch einen Luftspalt von höchstens 5 mm getrennt sind.

4. Regelungsvorrichtung nach Anspruch 1, dadurch gekennzeichnet, dass der Wechselstromgenerator (9) aus einem Asynchronmotor besteht, der als Synchrongenerator gekoppelt ist.

5. Regelungsvorrichtung nach einem beliebigen Anspruch 1 bis 4, dadurch gekennzeichnet, dass die Stellglieder (12) des Erregungsstromes mit Erfassungsmitteln (31) des Fahrwiderstandes des beweglichen Teils (3) des Asynchronmotors (1) verbunden sind, die nach den Mitteln (26) zum Vergleich des Ist- bzw. Sollwertes der Geschwindigkeit geschaltet sind.

6. Regelungsvorrichtung nach einem beliebigen Anspruch 1 bis 5, dadurch gekennzeichnet, dass die Stellglieder (12) des Erregungsstromes mit Erfassungsmitteln (33) der Beschleunigung des beweglichen Teils (3) des Asynchronmotors (1) verbunden sind, die nach den Mitteln (26) zum Vergleich des Ist- bzw. Sollwertes der Geschwindigkeit geschaltet sind.

7. Regelungsvorrichtung nach einem beliebigen Anspruch 1 bis 5, dadurch gekennzeichnet, dass die Stellglieder (12) des Erregungsstromes mit Erfassungsmitteln (36, 37) der Stromwerte am Ausgang des Wechselstromgenerators verbunden sind, die nach den Mitteln (26) zum Vergleich des Ist- bzw. Sollwertes der Geschwindigkeit geschaltet sind.

8. Regelungsvorrichtung nach Anspruch 7, dadurch gekennzeichnet, dass die Erfassungsmittel der Stromwerte aus Erfassungsmitteln (36) der momentanen Istwerte der Ströme sowie aus Erfassungsmitteln (37) des quadratischen Mittelwertes der Ströme bestehen.

**Claims**

1. Device for regulating the speed of asynchronous electrics motors (1) including a fixed portion (2) and a mobile portion, said device comprising a variable frequency AC generator (9) with excitation means (11) supplied by means (12) for controlling an excitation current, means (14) for with speed control driving the generator, means (19, 23) for regulating the generator (9) frequency according to an index value, (22) of the speed of said asynchronous motors, device caracterised in that it includes means (24) for measuring the actual speed of the mobile portion (3) of said motor and means (26) for comparing actual speed with the index value, (22) of the speed of said motor (1), said means 12 for controlling the excitation current being connected to said means (26) for comparing actual speed with the index value, and wherein the generator (9) has high internal reactance.

2. A regulation device according to claim 1, wherein said AC generator (9) comprises a rotor with a laminated magnetic circuit.

3. A regulation device according to claim 1, wherein said AC generator (9) comprises a stator and a rotor separated by a space of not more than five millimeters.

4. A regulation device according to claim 1, wherein said AC generator (9) is an asynchronous motor mounted as a synchronous generator.

5. A regulation device according to one of claims 1 to 4, means (31) for determining the drag of the mobile portion (3) of the asynchronous motor (1) are connected intermediate said means (12) for controlling the excitation current and said means (26) for comparing aactual speed with the index value.

6. A regulation device according to any of claims 1 to 5 means (33) for determining acceleration of the mobile portion (3) of the asynchronous motor (1) are connected intermediate said means (12) for controlling the excitation current and said means (26) for comparing actual speed with the index value.

7. A regulation device according to any of claims 1 to 6 means (36, 37) for detecting currents at the AC generator output are connected intermediate said means (12) for controlling the excitation current and said means (26) for comparing actual speed with the index value.

8. A regulation device according to claim 7, wherein the means for detecting currents comprise means (36) for detecting instaneous currents and means (37) for determining the average effective value of these currents.

FIG.1

FIG. 2

FIG. 3

FIG. 4

FIG. 5